# EUROPEAN PATENT SPECIFICATION

(11) **EP 2 639 533 B1**
(45) Date of publication and mention of the grant of the patent: **01.01.2020**
(21) Application number: 13159691.8
(22) Date of filing: 18.03.2013
(51) Int. Cl.: F25D 21/04, F25D 23/02

(54) **Refrigerator with sealing members disposed at end portions of a rotating bar.**
Kühlschrank mit Dichtungselementen, die an Endabschnitten einer Drehstange angeordnet sind.
Réfrigérateur avec des éléments d'étanchéité disposés aux extrémités d'une barre en rotation.

(30) Priority: 16.03.2012 KR 20120027186
(43) Date of publication of application: 18.09.2013
(73) Proprietor: Samsung Electronics Co., Ltd., Gyeonggi-do 443-742 (KR)
(72) Inventor: Kim, Sung Mo, Gyeonggi-do (KR); Lee, Jee Hoon, Gyeonggi-do (KR); Kim, Myoung Hun, Gyeongsangnam-do (KR); Bae, Hak Gyun, Gyeongsangbuk-do (KR); Shon, Hee Tae, Gwangju (KR); Oh, Jong Hoon, Gwangju (KR); Yoon, Sinn Bong, Gwangju (KR); Hong, Kun Eui, Busan (KR)
(74) Representative: Gulde & Partner

(56) References cited:
- EP-A2- 2 169 335
- WO-A2-2011/037410
- WO-A2-2011/154425
- CN-A- 102 374 740
- JP-A- H08 334 287
- JP-A- 2000 055 534
- JP-A- 2011 112 290
- JP-A- 2011 174 625
- US-A- 4 330 310
- US-A1- 2002 117 949
- US-A1- 2005 046 319
- US-A1- 2009 273 264

## Description

### BACKGROUND

### 1. Field

Embodiments of the present disclosure relate to a refrigerator having a rotating bar configured to seal a gap formed between a pair of doors thereof.

### 2. Description of the Related Art

In general, a refrigerator is a household appliance having a storage compartment to store food, and a cool air supplying apparatus to supply cool air to the storage compartment to store the food in a fresh manner. The refrigerator, according to the type of the storage compartment and a door thereof, may be provided with the type thereof classified.

A TMF (Top Mounted Freezer)-type refrigerator is provided therein with a storage compartment that is divided into an upper side and a lower side by a horizontal partition while a freezing compartment is formed at the upper side and a refrigerating compartment is formed at the lower side, and a BMF (Bottom Mounted Freezer)-type refrigerator is provided with a refrigerating compartment formed at the upper side while a freezing compartment is formed at the lower side.

In addition, a SBS (Side By Side)-type refrigerator is provided therein with a storage compartment that is divided into an left side and a right side by a vertical partition while a freezing compartment is formed at one side and a refrigerating compartment is formed at the other side, and a FDR (French Door Refrigerator)-type refrigerator is provided therein with a storage compartment that is divided into an upper side and a lower side by a horizontal partition while a refrigerating compartment is formed at the upper side and a freezing compartment is formed at the lower side, as the refrigerating compartment at the upper side is open/closed by a pair of doors.

Meanwhile, at a door of a refrigerator, a gasket is provided to seal a gap which is being spaced apart between the door and the body of the refrigerator when the door is closed. However, with respect to the FDR-type refrigerator, the refrigerating compartment at the upper side is open and closed by a pair of doors, but the refrigerating compartment is not provided therein with a vertical partition, and thus a gap formed between the pair of doors may not be sealed by the gasket. So, as to seal the gap which is being spaced apart between the pair of doors as such, a rotating bar rotatably installed at one of the pair of the doors is suggested.

The rotating bar as such, when the pair of doors is closed, is being rotated in a horizontal state with respect to the pair of doors to seal the gap in between the pair of doors, and when one door provided with the rotating bar installed thereto is open, the rotating bar is being rotated in a vertical state with respect to the other door, so that the rotating bar is not being interfered at the other door, which is not provided with the rotating bar installed thereto.

Meanwhile, at the rotating bar as such, a heat insulation member configured to block cool air from being discharged from a storage compartment, a plate formed with metallic material to come into close contact with the gasket installed at a rear surface of the door, and a heat generating member configured to radiate heat to prevent frost from forming at the metallic plate are included.

An example of the refrigerator as such has been suggested in the U.S. Patent No. 7,008,032. However, in the refrigerator in accordance with the above publication, the heat of the heat generating member is heat-conducted through the plate to the both edges of the rotating bar, and finally, is penetrated to an inside the storage compartment, thereby lowering the thermal efficiency of the refrigerator.

Furthermore, US 2009/273264 A1 discloses a French-type refrigerators comprising two doors and a flapper mechanism rotatably coupled to the first door to seal a gap formed between the first door and the second door in a state that the first door and the second door are closed. Also, Japanese patent application JP 2011/112290 A is directed to a refrigerator with double doors comprising a partition member sealing the gap between the pair of doors, wherein partition member includes a case, a metallic plate and a heat source accommodated in the case and configured to prevent frost formation on the metallic plate. Finally, JP H08 334287 A discloses upper and lower guided members which seal the gaps between door and refrigerator cabinet.

### SUMMARY

It is an object of the present invention to provide refrigerator according to claim 1, which includes a rotating bar having an enhanced insulation performance, and configured to reduce energy by decreasing the heat loss of a heat insulation member.

It is another object of the present invention to provide a structure of a rotating bar configured to prevent the heat generated at a heat generating member from being delivered to a storage compartment.

Additional aspects of the disclosure will be set forth in part in the description which follows and, in part, will be apparent from the description, or may be learned by practice of the disclosure.

This object is solved by the features of the independent claims.

Advantageous embodiments are disclosed by the sub-claims.

In accordance with the present disclosure, with respect to a rotating bar configured to open and close the gap in between a pair of doors, the heat generated at a heat generating member of the rotating bar may be prevented from penetrating into an inside a storage compartment.

Thus, the heat loss of the heat insulation member is reduced, and the energy needed to prevent frost formation on the plate of the rotating bar is reduced.

Thus, since warm air is not being penetrated to an inside the storage compartment through the rotating bar, the insulation performance of the rotating bar is increased.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a drawing illustrating a front of a refrigerator in accordance with one aspect of the present disclosure.
FIG. 2 is an exploded perspective view showing a structure of a rotating bar of the refrigerator of FIG. 1.
FIG. 3 is an assembled perspective view of the rotating bar of the refrigerator of FIG. 1.
FIG. 4 is a cross-sectional view of the rotating bar of the refrigerator of FIG. 1.
FIG. 5 is a cross-sectional view of a rotating bar of a refrigerator in accordance with another aspect of the present disclosure.
FIGS. 6 to 9 are drawings to describe the operation of a rotating bar of the refrigerator of FIG. 1.
FIG. 10 is a drawing showing a structure of an insertion protrusion of the rotating bar of the refrigerator of FIG. 1.
FIGS. 11 to 12 are drawings to describe a vertical movement of the insertion protrusion of the rotating bar of the refrigerator of FIG. 1.

### DETAILED DESCRIPTION

Reference will now be made in detail to the embodiments of the present disclosure, examples of which are illustrated in the accompanying drawings, wherein like reference numerals refer to like elements throughout.

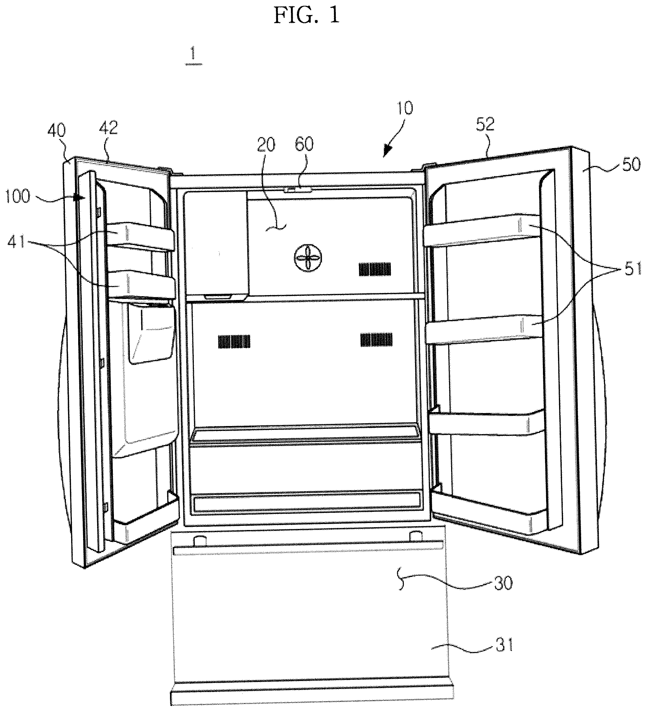

FIG. 1 is a drawing illustrating a front of a refrigerator in accordance with one aspect of the present disclosure. By referring to FIG. 1, a refrigerator 1 in accordance with one embodiment of the present disclosure includes a body 10, storage compartment 20 and 30 dividedly into an upper side and a lower side at an inside the body 10, doors 31, 40, and 50 configured to open/close the storage compartments 20 and 30, and a cool air supplying apparatus (not shown) to supply cool air to the storage compartments 20 and 30.

The body 10 may include an inner case forming the storage compartments 20 and 30, an outer case forming an exterior appearance by being coupled to an outer side of the inner case, and a heat insulation member foamed in between the inner case and the outer case and configured to thermally insulate the storage compartments 20 and 30 from each other.

The cool air supplying apparatus (not shown) may generate cool air by using a cooling circulation cycle configured to compress, condense, expand, and evaporate refrigerant.

The storage compartments 20 and 30 may be provided with a front surface thereof open, and may be partitioned into the refrigerating compartment 20 at the upper side and the freezing compartment 30 at the lower side. The refrigerating compartment 20 may be open and closed by the pair of doors 40 and 50 that are rotatably coupled to the body 10, and the freezing compartment 30 may be open and closed by the sliding door 31 slidably mounted at the body 10.

The pair of doors 40 and 50 configured to open and close the refrigerating compartment 20 may be disposed side by side. Hereinafter, for the sake of convenience, the left side door 40 on the drawing is referred to as the first door 40 and the right side door 50 on the drawing is referred to as the second door 50.

The first door 40 is configured to open and close a left portion of the front surface of the refrigerating compartment 20 that is open, and the second door 50 is configured to open and close the remaining portion of the front surface of the refrigerating compartment 20 that is open. Door shelves 41 and 51 are provided at the rear surfaces of the first door 40 and the second door 50, respectively, to store foods. In addition, at the rims of the rear surfaces of the first door 40 and the second door 50, gaskets 42 and 52 are provided, respectively, to seal the gap with respect to the body 10 in a state that the first door 40 and the second door 50 are closed.

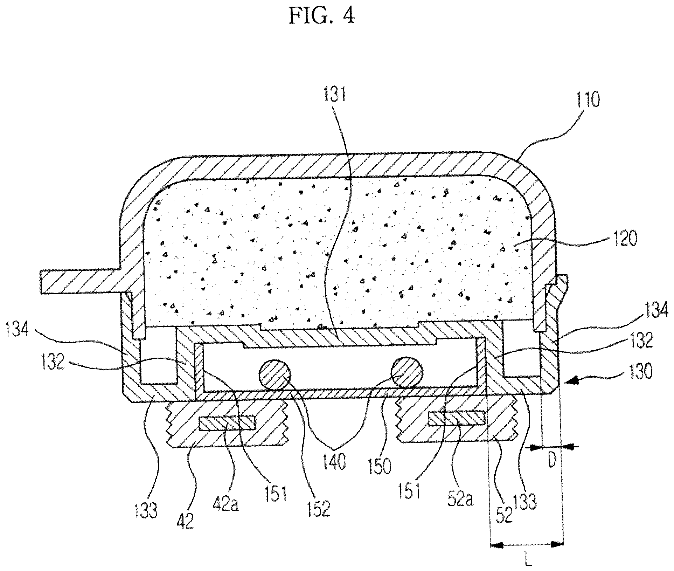

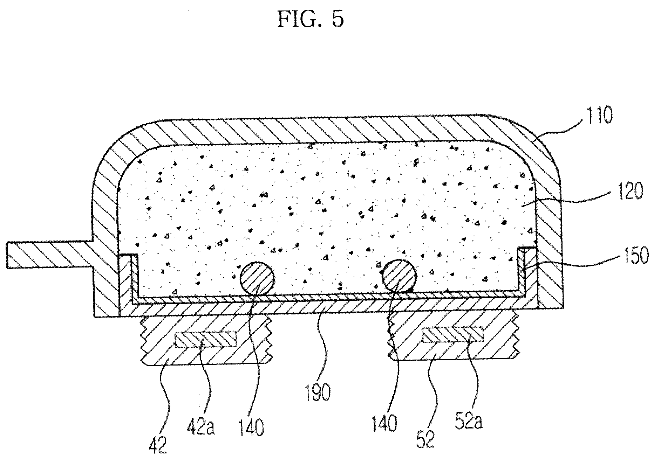

The gaskets 42 and 52 may be installed in a shape of a loop along the rims of the rear surfaces of the first door 40 and the second door 50, respectively, and at an inside the gaskets 42 and 52, magnets (42a and 52a in FIGS. 4 and 5) may be included, respectively.

Meanwhile, in a state of the first door 40 and the second door 50 closed, a gap may be formed between the first door 40 and the second door 50, and in order to seal the gap as such, a rotating bar 100 is rotatably mounted at the first door 40.

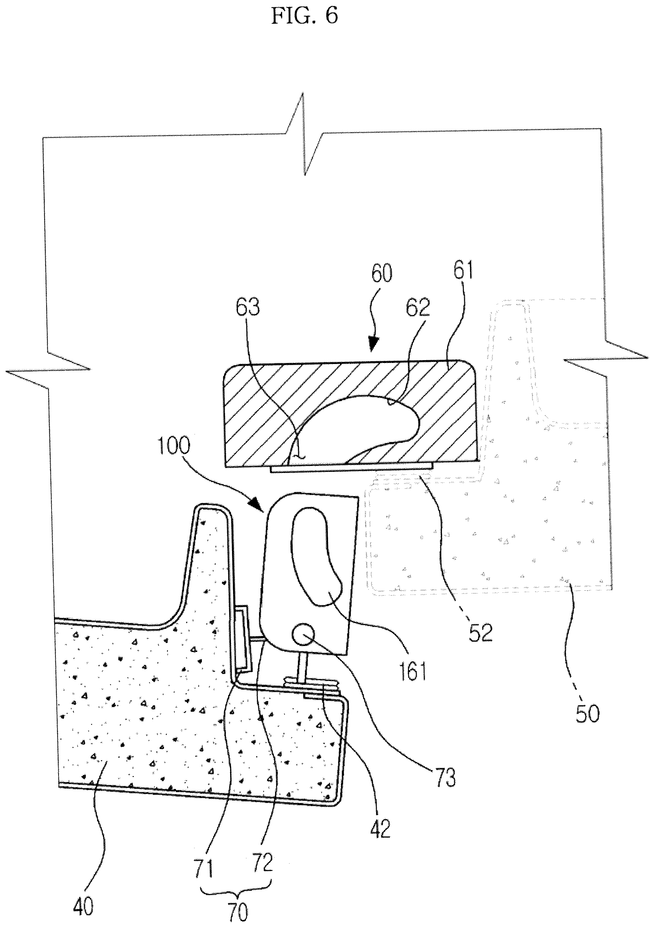

The rotating bar 100 as such is provided in a shape of a bar formed in lengthways along the height direction of the first door 40, and may be rotated by a guide part 60 provided at the body 10. The guide part 60 of the body 10 may include a guide body (61 in FIG. 6) coupled to the body 10, and a guide groove (62 in FIG. 6) formed at the guide body 61. Hereinafter, the structure and the operation of the rotating bar 100 as such will be described.

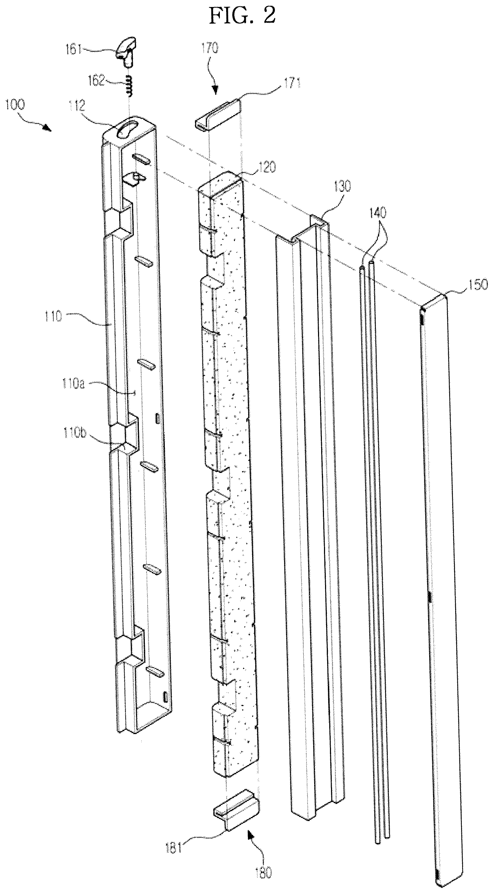

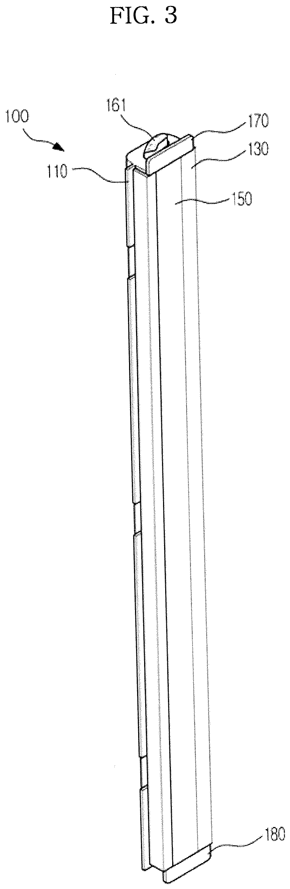

FIG. 2 is an exploded perspective view showing a structure of a rotating bar of the refrigerator of FIG. 1, FIG. 3 is an assembled perspective view of a rotating bar of the refrigerator of FIG. 1, and FIG. 4 is a cross-sectional view of a rotating bar of the refrigerator of FIG. 1.

By referring to FIGS. 2 to 4, the rotating bar 100 includes a case 110 having an accommodating space 110a and provided with one surface thereof open, a heat insulation member 120 accommodated in the accommodating space 110a of the case 110, a cover 130 coupled to the one open surface of the case 110, a metallic plate 150 coupled to an outer side of the cover 130, and a heat generating member 140 disposed at a space in between the cover 130 and the metallic plate 150.

The case 110 is configured to form an exterior appearance of the rotating bar 100, and may be provided at an inside thereof with the accommodating space 110a having one surface open, and the one open surface of the rotating bar 100 may be covered by the cover 130. A hinge bracket coupling part 110b to which a hinge bracket (70 in FIG. 6) is coupled may be provided at the case 110.

The hinge bracket 70 may include a fixing part (71 in FIG. 6) fixed to the rear surface of the first door 40, and a hinge bar (72 in FIG. 6) configured to connect the fixing part 71 to the rotating bar 100, so that the rotating bar 100 is rotated on a rotation shaft (73 in FIG. 6). The fixing part 71 may be coupled to the rear surface of the first door 40 by use of a connecting member such as a screw.

In addition, at an upper surface of the case 110, a passage part 112 may be provided, so that an insertion protrusion 161 being inserted into the guide groove (62 in FIG. 6) of the guide part (60 in FIG. 6) may be protruded to an outside the case 110. The passage part 112 may be provided in a form of a hole having the same shape as the insertion protrusion 161.

In the embodiment of the present disclosure, the guide part 60 is formed at an upper portion of the body 10 while the insertion protrusion 161 protrudes from an upper side of the rotating bar 100. However, the guide part 60 may be formed at a lower portion of the body 10 while the insertion protrusion 161 may protrude from a lower side of the rotating bar 100. In this case, the passage part 112 of the case 110 may also be formed at a lower surface of the case 110. The case 110 as such may be injection-molded using plastic material as an integrated body.

The heat insulation member 120 is configured to thermally insulate the refrigerating compartment 20, and may be formed of the EPS (Expanded PolyStyrene) material having superior insulation performance and light weight. The heat insulation member 120, after being formed in an approximate shape to be inserted into the accommodating space 110a of the case 110, isinserted into the accommodating space 110a of the case 110.

The cover 130 is configured to cover the one surface of the case 110 that is open, and iscoupled to the one open surface of the case 110 after the heat insulation member 120 is inserted into the accommodating space 110a of the case 110.

As illustrated on FIG. 4, the cover 130 is provided with a cross section obtained by being bent a number of times, and forms a portion of the side surface and a portion of the rear surface of the rotating bar 100. Here, the rear surface of the rotating bar 100 is referred to as the surface facing the gaskets 42 and 52 of the doors 41 and 51.

In detail, the cover 130 includes a heat insulation member close-contact part 131 being in contact with the heat insulation member 120, a second coupling part 132 to which the metallic plate 150, which will be described later, is coupled, a heat conduction blocking part 133 protruded toward the metallic plate 150, and a side surface forming part 134 forming at least one portion of the side surface of the rotating bar 100. The cover 130 as such is formed of plastic material having low heat conductivity, and may be injection-molded in an integrated form.

The metallic plate 150 may be coupled to an outer side of the cover 130 as such, and the metallic plate 150 is formed of metallic material so as to come into close contact with the gaskets 42 and 52 by the magnetic force of the magnets 42a and 52a included at the gaskets 42 and 52, and to provide rigidity to the rotating bar 100.

The metallic plate 150 may include a first coupling part 151 being coupled to the second coupling part 132, and a gasket close-contact part 152 coming into close contact with the gaskets 42 and 52. The first coupling part 151 of the metallic plate 150 is coupled to the second coupling part 132 of the cover 130 by a connecting member such as a screw or by an adhesive member.

Meanwhile, the heat generating member 140, which is configured to generate heat to prevent frost from being formed at the metallic plate 150 due to the temperature difference between the inside and the outside the refrigerating compartment 40, may be disposed at a space being formed by the first coupling part 151 of the metallic plate 150 and the gasket close-contact part 152 of the metallic plate 150.

Here, as to prevent the heat generated at the heat generating member 140 from being excessively delivered to the metallic plate 150, the heat generating member may be implemented by a heating cable 140, which includes a heating wire covered with non-conductive material such as silicon or an FEP (Fluorinated Ethylene Propylene)..

Thus, the heat generating member 140, so as to deliver the minimum amount of heat to the metallic plate 150 to prevent frost from forming on the metallic plate 150, may be disposed in line-contact with the metallic plate 150 instead of being surface-contacted with the metallic plate 150.

Meanwhile, the heat conduction blocking part 133 of the cover 130 and the gasket close-contact part 152 of the metallic plate 150, both of which are previously described, form the rear surface of the rotating bar 100. The central portion of the rear surface of the rotating bar 100 is being formed by the gasket close-contact part 152 of the metallic plate 150, and the surrounding portion of the both sides of the rear surface of the rotating bar 100 is being formed by the heat conduction blocking part 133 of the cover 130.

The heat conduction blocking part 133 of the cover 130, as to prevent the heat, which is being conducted along the gasket close-contact part 152 of the metallic plate 150, from being conducted to the side surface of the rotating bar 100, is needed to be provided with a predetermined length 'L'.

The length 'L' of the heat conduction blocking part 133 of the cover 130 is provided to be approximately larger than a wall thickness 'D' of the cover 130, and within the limit that the metallic plate 150 comes into close contact with the gaskets 42 and 52 by the magnetic force of the magnets 42a and 52a that are included at the gaskets 42 and 52, the length of the gasket close-contact part 152 of the metallic plate 150 may be reduced while the length 'L' of the heat conduction blocking part 133 of the cover 130 may be expanded.

While provided with the structure as the above, in a state of the first door 40 and the second door 50 are closed, the rotating bar 100 comes into close contact with the gaskets 42 and 52 of the first door 40 and the second door 50 to seal the gap in between the first door 40 and the second door 50, and may also minimize the heat, which is generated at the heat generating member 140 of the rotating bar 100, from penetrating to an inside the refrigerating compartment 20.

Thus, the insulation performance of the rotating bar 100 is enhanced while the heat loss of the heat generating member 140 is minimized, thereby able to save the energy configured to prevent frost from forming at the rotating bar 100.

Meanwhile, sealing members (170 and 180 in FIG. 2) may be provided at an upper end and at a lower end of the rotating bar 100, respectively, to seal a gap formed between the rotating bar 100 and the body 10 in a state of the doors 40 and 50 are closed.

The sealing member 170 of the upper end and the sealing member 180 of the lower end may include blocking walls 171 and 172, respectively, which protrude to seal the gap in between the guide part 60 of the body 10 and the rotating bar 100 in a state that the door 40 is closed.

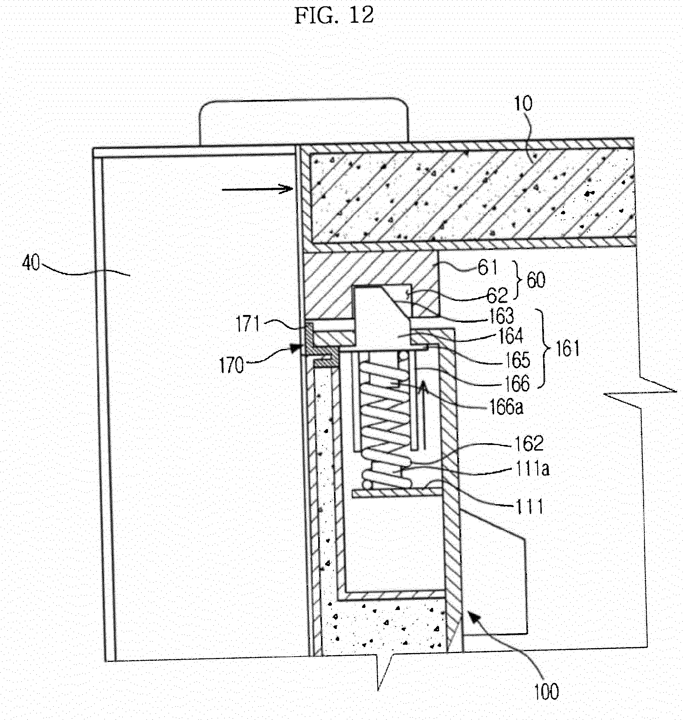

As illustrated in one embodiment of FIG. 12 of the present disclosure, in a case when the guide part 60 is provided at an upper portion of the body 10, the sealing member 170 may seal the gap in between the guide part 60 and the rotating bar 100.

The sealing members 170 and 180 as such may be formed of flexible material such as rubber to seal the gap in between the body 10 and the rotating bar 100 in a smooth manner without damage by a collision.

FIG. 5 is a cross-sectional view of a rotating bar of a refrigerator in accordance with another aspect of the present disclosure. By referring to FIG. 5, the structure of a rotating bar in accordance with another embodiment of the present disclosure will be described. The same structures will be provided with the same reference numerals while the descriptions thereof may be omitted.

In accordance with another embodiment of the present disclosure, the rotating bar 100 includes a case 110 provided with an accommodating space formed at an inside thereof and having one surface thereof open, a heat insulation member 120 accommodated in the accommodating space of the case 110, a metallic plate 150 coupled to the one open surface of the case 110, a heat generating member 140 configured to radiate heat to prevent frost from forming on the metallic plate 150, and a heat insulation film 190 formed at a surface of the metallic plate 150 being exposed to the outside.

The heat insulation film 190 is configured to increase the heat resistance of the metallic plate 150 so as to prevent the heat generated at the heat generating member 140 from penetrating to the refrigerating compartment 20 after being delivered along the metallic plate 150 to the both side surfaces of the rotating bar, and the heat insulation film 190 may be formed of material having a low heat conductivity.

The heat insulation film 190 may be formed on the surface of the metallic plate 150 through a method such as a coating, or may be formed by attaching processed material having a shape of a thin panel to the metallic plate 150.

However, the heat insulation film 190is needed to be provided with a thickness less than a predetermined thickness, so that, in a state of the first door 40 and the second door 50 are closed, the rotating bar may come into close contact with the gaskets 42 and 52 by the magnetic force of the magnets 42a and 52a that are included at the gaskets 42 and 52.

As for the heat generating member 140, a heating cable may be used, and by being line-contacted with the metallic plate 150, may supply the minimum amount of heat needed to prevent frost from forming at the metallic plate 150. The heat generating member 140, except for the area that is being line-contacted with the metallic plate 150, is disposed in a way to be surrounded by the heat insulation member 120, thereby minimizing heat loss.

FIGS. 6 to 9 are drawings to describe the operation of the rotating bar of the refrigerator of FIG. 1. By referring to FIGS. 6 to 9, the motion of the rotating bar of the refrigerator in accordance with one embodiment of the present disclosure will be described in brief.

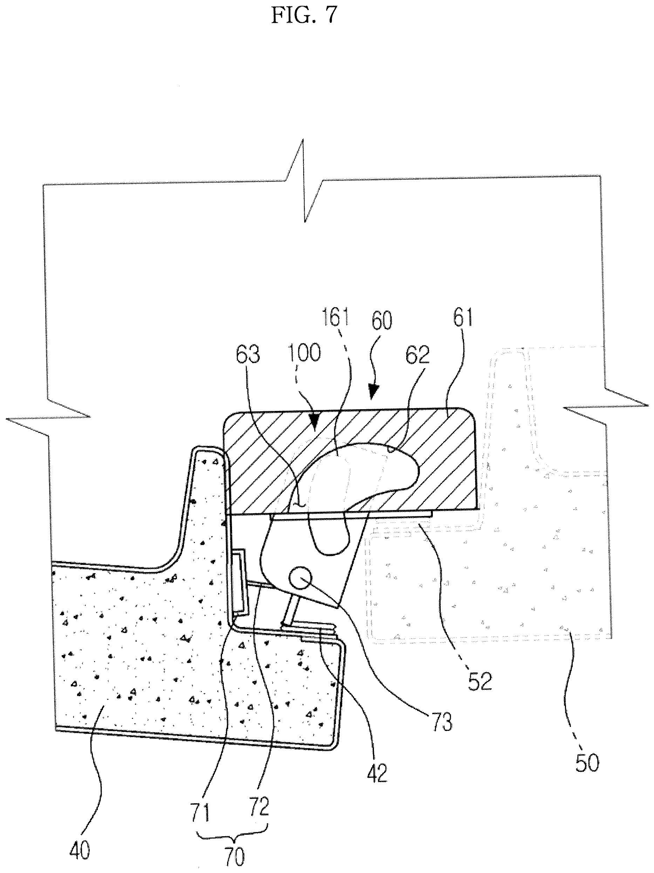

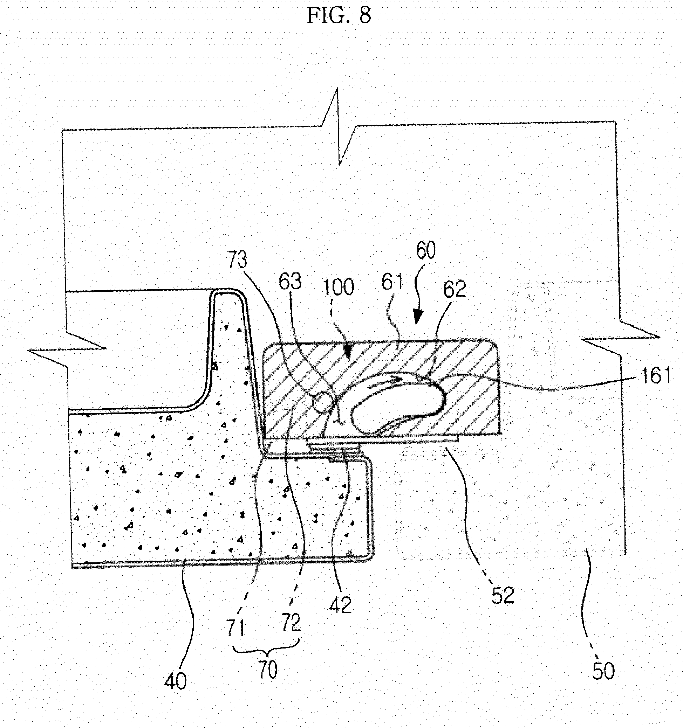

FIG. 6 illustrates a normal position of the rotating bar 100 in a state that the door 40 is open, FIG. 7 illustrates a process of the first door 40 being closed from the state of FIG. 6, and FIG. 8 illustrates a state of the first door 40 and the second door 50 being closed.

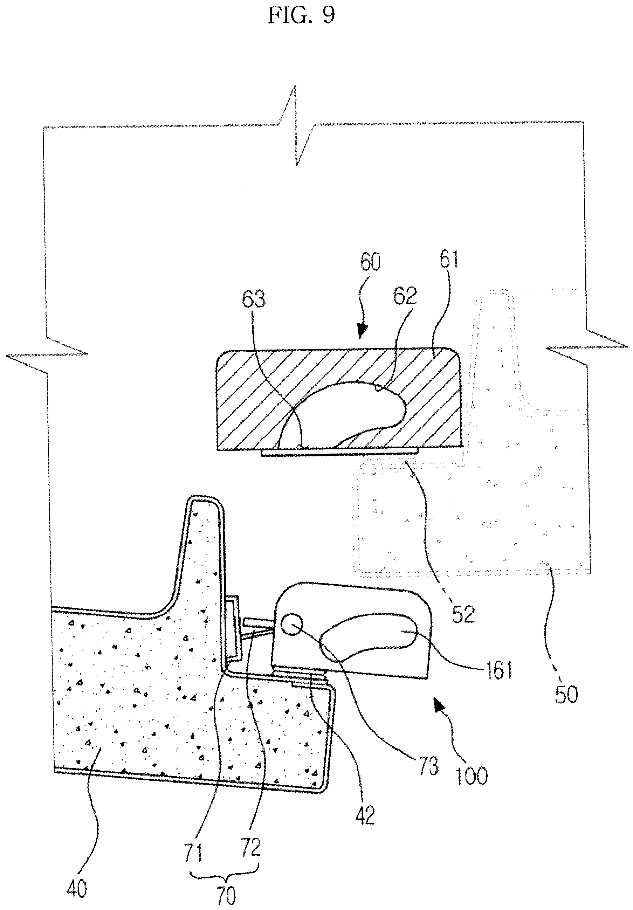

FIG. 9 illustrates an abnormal position of the rotating bar 100 in a state that the first door 40 is open.

As illustrated on FIG. 6, in a state that the first door 40 is open, the normal position of the rotating bar 100 is a position at which the rear surface of the rotating bar 100 is approximately perpendicular to the first door 40. Hereinafter, the position as such is referred to as a perpendicular position.

In a state that the rotating bar 100 is at the vertical position, as the first door 40 is closed, as illustrated on FIG. 7, the insertion protrusion 161 of the rotating bar 100 may be entered into an inside the guide groove 62 through a guide groove entry 63 of the guide part 60 that is provided at the body 10.

The insertion protrusion 161 that is entered into an inside the guide groove 62 is rotated along the curved surface of the guide groove 62, and as the insertion protrusion 161 rotates, the rotating bar 100 is also rotated.

Finally, as illustrated on FIG. 8, when the first door 40 is completely closed, the rear surface of rotating bar 100 is disposed in an approximately parallel position with respect to the first door 40 and of the second door 50, and thus the rotating bar 100 comes into close contact with the gaskets 42 and 52, thereby able to seal the gap in between the first door 40 and the second door 50. Hereinafter, this position of the rotating bar 100 will be referred to as a parallel position.

Finally, in the process of the first door 40 being closed, the rotating bar 100, in the order of sequence as illustrated on FIG. 6, FIG. 7, and FIG. 8, is rotated in clockwise direction on the drawings.

In addition, on the contrary, in the process of the first door 40 being open, the rotating bar 100, in the order of sequence of FIG. 8, FIG. 7, and FIG. 6, is rotated in the counterclockwise direction with respect to the drawings, and in the state of the first door 40 is completely open, the rotating bar 100 is disposed in a vertical position essentially perpendicular with respect to first and second door.

As the above, as the rotating bar 100 is disposed at the parallel position, the first door 40, even in a state of the second door 50 being closed, may be closed without having the rotating bar 100 being interfered by the second door 50, and in addition, the insertion protrusion 161 of the rotating bar 100 may enter into the guide groove 62 through the guide groove entry 63.

However, in a state that the first door 40 is open, the rotating bar 100 may be disposed at the perpendicular position due to an erroneous operation by a user. In this case, in the process of the first door 40 being closed, the rotating bar 100 may be interfered by the second door 50. In addition, even if the rotating bar 100 does interfere with the second door 50 since the second door 50 is open, the insertion protrusion 161 may not be able to enter the guide groove 62 through the guide groove entry part 63, and may collide with the guide body 61.

Thus, the first door 40 is not being completed closed, and the cool air of the refrigerating compartment 20 may be discharged, thereby causing a damage on the insertion protrusion 161.

Thus, the insertion protrusion 161 of the rotating bar 100 of the refrigerator in accordance with one embodiment of the present disclosure is configured to be vertically movable, so that the insertion protrusion 161 is inserted into the guide groove 62 without being collided with the guide body 61 even in a state of the rotating bar 100 being in the perpendicular position. The structure of the insertion protrusion 161 as such will be described hereinafter.

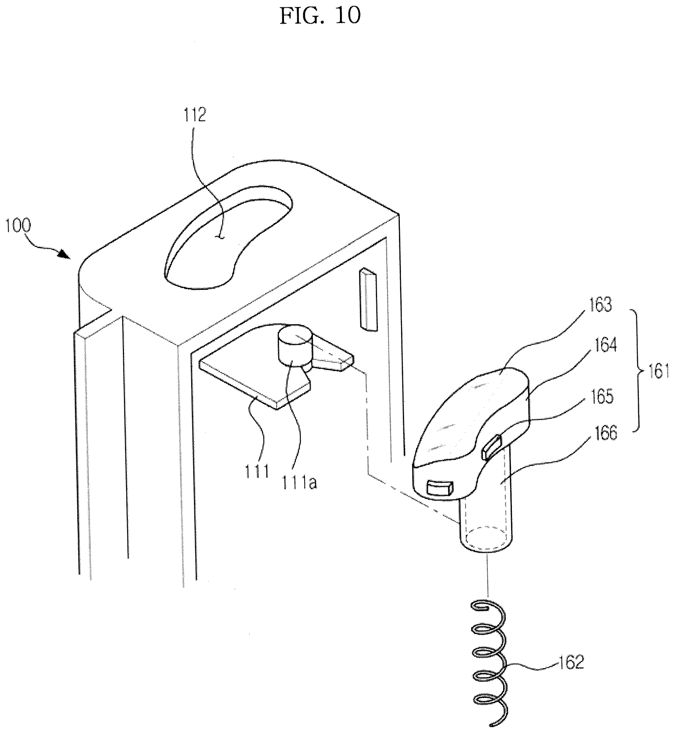

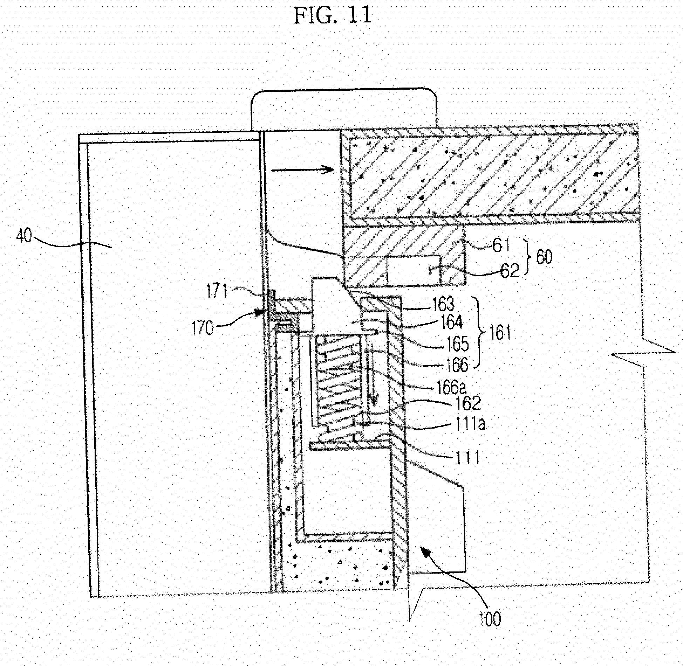

FIG. 10 is a drawing showing a structure of the insertion protrusion of the rotating bar of the refrigerator of FIG. 1, and FIGS. 11 to 12 are drawings to describe a vertical movement of the insertion protrusion of the rotating bar of the refrigerator of FIG. 1.

By referring to FIGS. 10 to 12, the insertion protrusion 161 includes a body part 166 disposed at an inside the rotating bar 100, a protrusion part 164 protruded to the outside the rotating bar 100 through the passage part 112, a stopper part 165 to prevent the insertion protrusion 161 from being separated from the rotating bar 100, and an inclined surface 163 formed at the protrusion part 164.

The body part 166 is provided at an inside thereof with a hollowness into which an elastic member 162 may be inserted, and the insertion protrusion 161 is elastically biased by the elastic member 162 in a state that the protrusion part 164 is protruded to the outside the rotating bar 100.

At the case 110 of the rotating bar 100, a supporting part 111 to support the elastic member 162, and also a supporting pin 111a protruding from the supporting part 111 are provided. At the body part 166, a supporting pin 166a is provided to support the elastic member 162.

The protrusion part 164 is provided with an approximately same shape as the passage part 112 while provided with a size smaller than the size of the passage part 112 so as to be able to pass through the passage part 112. The protrusion part 164 may be provided with the stopper part 165 to limit the protrusion range of the protrusion part 164 to the outside of the protrusion part 164.

The inclined surface 163 formed at the protrusion part 164 is configured to convert horizontal force into vertical force, and is configured in a way that the insertion protrusion 161 may move vertically by the horizontal pressing force of the guide body 61 in the process of the first door 40 being closed while the rotating bar 100 is at the perpendicular position.

Thus, as illustrated on FIG. 9, if the first door 40 is closed in a state of the rotating bar 100 is at the perpendicular position, the insertion protrusion 161 collide with the guide body 61, and descends by the pressing force of the guide body 61.

In the state as such, when the first door 40 is completely closed, the insertion protrusion 161 ascends by the restoration force of the elastic member 162, and may be inserted into the guide groove 62.

According to the structure as the above, the first door 40 of the refrigerator in accordance with one embodiment of the present disclosure, even in a state that the rotating bar 100 is rotated to the perpendicular position, may be closed without interference. Thus, the user convenience is enhanced, and the cool air loss due to the incomplete closing of the doors 40 and 50 may be prevented.

## Claims

1. A refrigerator (1), comprising:
a body (10);
a storage compartment (20) formed at an inside the body (10) while having a front surface thereof open;
a first door (40) configured to open or close a portion of the front surface of the storage compartment that is open;
a second door (50) configured to open or close a remaining portion of the front surface of the storage compartment that is open;
a first gasket (42) installed at a rear surface of the first door (40) to seal a gap formed between the first door and the body;
a second gasket (52) installed at a rear surface of the second door (50) to seal a gap formed between the second door and the body; and
a rotating bar (100) rotatably coupled to the first door (40) to seal a gap formed between the first door (40) and the second door (50) in a state that the first door and the second door are closed,
wherein the rotating bar (100) comprises
a case (110) provided with an accommodating space (110a) therein, and having one surface thereof open;
a heat insulation member (120) accommodated in the accommodating space (110a);
a cover (130) being coupled to the one surface of the case (110) that is open, covering the accommodating space (110a) and having a recess; and
the rotating bar (100) further comprises
a metallic plate (150) being positioned in the recess and being coupled to an outer side of the cover (130); and
a heat generating member (140) positioned in a space between the metallic plate (150) and the cover (130) and configured to prevent frost formation on the metallic plate (150),
wherein the cover (130) comprises a heat conduction blocking part (133) protruding to both sides of the metallic plate (150) to prevent heat of the heat generating member (140) from being penetrated into the storage compartment (20) after being heat conducted along the metallic plate (150),
**characterized in that**
sealing members (170, 180) are disposed at an upper and a lower end portions of the 2. rotating bar (100), the sealing members being configured to seal gaps formed between upper and lower end portions of the rotating bar (100) and the body (10) when the first door (40) is closed,
wherein each of the sealing members (170, 180) comprises a fixing portion engaged with a respective one of the end portions of the metallic plate (150), and
wherein each of the fixing portions of the sealing members (170, 180) has a groove allowing the respective one of the end portions of the metallic plate (150) to be inserted thereinto.

2. The refrigerator of claim 1, wherein:
the metallic plate (150) comprises a gasket close-contact part (152) coming into close contact with the first gasket (42) and the second gasket (52), and a first coupling part (151) being coupled to the cover (130) while being bent inwardly from the gasket close-contact part (152), and
the heat conduction blocking part (133) and the gasket close-contact part (152) form a same flat surface.

3. The refrigerator of claim 2, wherein:
the cover (130) comprises a second coupling part (132) being bent inwardly from the heat conduction blocking part (133) so that the first coupling part (151) is coupled to the second coupling part (132).

4. The refrigerator of claim 3, wherein:
the heat generating member (140) is disposed at a space formed by the gasket close-contact part (152) and the first coupling part (151).

5. The refrigerator of claim 1, wherein:
the cover (130) is formed of non-metallic material having a heat conductivity rate lower than a heat conductivity rate of the metallic plate (150).

## Patentansprüche

1. Kühlschrank (1), umfassend:
einen Körper (10);
ein Aufbewahrungsfach (20), das innerhalb des Körpers (10) ausgebildet ist und eine offene vordere Fläche aufweist;
eine erste Tür (40), die dazu ausgestaltet ist, einen Abschnitt der offenen vorderen Fläche des Aufbewahrungsfachs zu öffnen oder zu schließen;
eine zweite Tür (50), die dazu ausgestaltet ist, einen verbleibenden Abschnitt der offenen vorderen Fläche des Aufbewahrungsfachs zu öffnen oder zu schließen;
eine erste Dichtung (42), die an einer hinteren Fläche der ersten Tür (40) eingerichtet ist, um einen Spalt abzudichten, der zwischen der ersten Tür und dem Körper ausgebildet ist;
eine zweite Dichtung (52), die an einer hinteren Oberfläche der zweiten Tür (50) eingerichtet ist, um einen Spalt abzudichten, der zwischen der zweiten Tür und dem Körper ausgebildet ist; und
eine Drehstange (100), die drehbar an die erste Tür (40) gekoppelt ist, um einen Spalt abzudichten, der zwischen der ersten Tür (40) und der zweiten Tür (50) ausgebildet ist bei einem Zustand, in dem die erste Tür und die zweite Tür geschlossen sind,
wobei die Drehstange (100) Folgendes umfasst:
ein Gehäuse (110), in dem ein Aufnahmeraum (110a) vorgesehen ist, aufweisend eine offene Fläche;
ein Wärmeisolierelement (120), das im Aufnahmeraum (110a) aufgenommen ist;
eine Abdeckung (130), die an die eine offene Fläche des Gehäuses (110) gekoppelt ist, den Aufnahmeraum (110a) abdeckt und eine Aussparung aufweist, und
die Drehstange (100) ferner Folgendes umfasst:
eine metallische Platte (150), die in der Aussparung positioniert und an eine äußere Seite der Abdeckung (130) gekoppelt ist; und
ein Wärmeerzeugungselement (140), das in einem Raum zwischen der metallischen Platte (150) und der Abdeckung (130) positioniert und dazu ausgestaltet ist, Frostbildung auf der metallischen Platte (150) zu verhindern,
wobei die Abdeckung (130) ein Wärmeleitungsblockierteil (133) umfasst, das zu beiden Seiten der metallischen Platte (150) vorsteht, um zu verhindern, dass Wärme des Wärmeerzeugungselements (140) in das Aufbewahrungsfach (20) eindringt, nachdem sie entlang der metallischen Platte (150) wärmegeleitet wurde,
**dadurch gekennzeichnet, dass**
Dichtungselemente (170, 180) an einem oberen und einem unteren Endabschnitt der Drehstange (100) angeordnet sind, wobei die Dichtungselemente dazu ausgestaltet sind, Spalten abzudichten, die zwischen oberen und unteren Endabschnitten der Drehstange (100) und dem Körper (10) ausgebildet sind, wenn die erste Tür (40) geschlossen ist,
wobei jedes der Dichtungselemente (170, 180) einen Befestigungsabschnitt umfasst, der mit jeweils einem der Endabschnitte der metallischen Platte (150) wirkverbunden ist, und
wobei jeder der Befestigungsabschnitte der Dichtungselemente (170, 180) eine Nut ausbildet, in die der Endabschnitt der metallischen Platte (150) hineingeführt ist.

2. Kühlschrank nach Anspruch 1, wobei:
die metallische Platte (150) ein Dichtungsengkontaktteil (152), das mit der ersten Dichtung (42) und der zweiten Dichtung (52) in engem Kontakt steht, und ein erstes Kopplungsteil (151), der an die Abdeckung (130) gekoppelt ist, während es vom Dichtungsengkontaktteil (152) einwärtsgebogen wird, umfasst, und
das Wärmeleitungsblockierteil (133) und das Dichtungsengkontaktteil (152) eine gemeinsame ebene Fläche ausbilden.

3. Kühlschrank nach Anspruch 2, wobei:
die Abdeckung (130) ein zweites Kopplungsteil (132) umfasst, das vom Wärmeleitungsblockierteil (133) einwärtsgebogen wird, so dass das erste Kopplungsteil (151) an das zweite Kopplungsteil (132) gekoppelt ist.

4. Kühlschrank nach Anspruch 3, wobei:
das Wärmeerzeugungselement (140) an einem Raum angeordnet ist, der durch das Dichtungsengkontaktteil (152) und das erste Kopplungsteil (151) ausgebildet ist.

5. Kühlschrank nach Anspruch 1, wobei:
die Abdeckung (130) aus nicht-metallischem Material gebildet ist, das eine Wärmeleitfähigkeit aufweist, die geringer ist als eine Wärmeleitfähigkeit der metallischen Platte (150).

## Revendications

1. Réfrigérateur (1), comprenant :
un corps (10) ;
un compartiment de stockage (20) formé à l'intérieur du corps (10) tandis qu'il comporte une surface avant ouverte ;
une première porte (40) conçue pour ouvrir ou fermer une partie de la surface avant du compartiment de stockage qui est ouverte ;
une seconde porte (50) conçue pour ouvrir ou fermer une partie restante de la surface avant du compartiment de stockage qui est ouverte ;
un premier joint d'étanchéité (42) placé sur une surface arrière de la première porte (40) pour fermer hermétiquement un interstice formé entre la première porte et le corps ;
un second joint d'étanchéité (52) placé sur une surface arrière de la seconde porte (50) pour fermer hermétiquement un interstice formé entre la seconde porte et le corps ; et
une barre rotative (100) couplée de manière rotative à la première porte (40) pour fermer hermétiquement un interstice formé entre la première porte (40) et la seconde porte (50) dans un état dans lequel la première porte et la seconde porte sont fermées,
la barre rotative (100) comprenant
un boîtier (110) pourvu d'un espace de réception (110a) dans celui-ci, et présentant une surface ouverte ;
un élément d'isolation thermique (120) logé dans l'espace de réception (110a) ;
un couvercle (130), couplé à la surface du boîtier (110) qui est ouverte, recouvrant l'espace de réception (110a) et comportant un évidement ; et
la barre rotative (100) comprenant en outre
une plaque métallique (150) qui est positionnée dans l'évidement et qui est couplée à un côté extérieur du couvercle (130) ; et
un élément thermogène (140) positionné dans un espace entre la plaque métallique (150) et le couvercle (130) et conçu pour empêcher la formation de givre sur la plaque métallique (150),
le couvercle (130) comprenant une partie de blocage de conduction thermique (133) dépassant des deux côtés de la plaque métallique (150) pour empêcher que la chaleur de l'élément thermogène (140) pénètre dans le compartiment de stockage (20) après avoir été conduite le long de la plaque métallique (150),
**caractérisé en ce que**
des éléments d'étanchéité (170, 180) sont disposés sur une extrémité supérieure et une extrémité inférieure de la barre rotative (100), les éléments d'étanchéité étant conçus pour fermer hermétiquement des interstices formés entre les extrémités supérieure et inférieure de la barre rotative (100) et le corps (10) quand la première porte (40) est fermée,
chacun des éléments d'étanchéité (170, 180) comprenant une partie de fixation en prise avec une extrémité respective de la plaque métallique (150), et
chacune des parties de fixation des éléments d'étanchéité (170, 180) comportant une rainure permettant à l'extrémité respective de la plaque métallique (150) d'être insérée dans celle-ci.

2. Réfrigérateur selon la revendication 1, dans lequel :
la plaque métallique (150) comprend une partie de contact étroit avec le joint d'étanchéité (152) qui vient en contact étroit avec le premier joint d'étanchéité (42) et le second joint d'étanchéité (52), et une première partie de couplage (151) qui est couplée au couvercle (130) tout en étant courbée vers l'intérieur depuis la partie de contact étroit avec le joint d'étanchéité (152), et
la partie de blocage de conduction thermique (133) et la partie de contact étroit avec le joint d'étanchéité (152) forment une même surface plane.

3. Réfrigérateur selon la revendication 2, dans lequel :
le couvercle (130) comprend une seconde partie de couplage (132) qui est courbée vers l'intérieur depuis la partie de blocage de conduction thermique (133) de telle sorte que la première partie de couplage (151) est couplée à la seconde partie de couplage (132).

4. Réfrigérateur selon la revendication 3, dans lequel :
l'élément thermogène (140) est disposé sur un espace formé par la partie de contact étroit avec le joint d'étanchéité (152) et la première partie de couplage (151).

5. Réfrigérateur selon la revendication 1, dans lequel :
le couvercle (130) est formé en un matériau non métallique présentant une conductibilité thermique inférieure à une conductibilité thermique de la plaque métallique (150).
